# EUROPÄISCHE PATENTSCHRIFT

(11) **EP 1 283 642 B1**
(45) Veröffentlichungstag und Bekanntmachung des Hinweises auf die Patenterteilung: **07.03.2007**
(21) Anmeldenummer: 01810767.2
(22) Anmeldetag: 09.08.2001
(51) Int. Cl.: H04Q 7/34

(54) **Analyse eines Datenübertragungssystems**
Analysis of a data transmission system
Analyse d'un système de transmission de données

(43) Veröffentlichungstag der Anmeldung: 12.02.2003
(73) Patentinhaber: Ascom (Schweiz) AG, 3000 Bern 14 (CH)
(72) Erfinder: Wu, Raymond, 3185 Schmitten (CH)
(74) Vertreter: Roshardt, Werner Alfred

(56) Entgegenhaltungen:
- EP-A- 0 786 883
- EP-A- 0 984 645
- WO-A-00/70897

## Beschreibung

### Technisches Gebiet

Die Erfindung betrifft ein Verfahren und eine Vorrichtung zur Analyse eines Datenübertragungssystems, bei welchem mittels wiederholter Messung einer bestimmten Anzahl von Systemparametern eine Servicequalität überwacht wird.

### Stand der Technik

Datenübertragungssysteme sind komplexe Gebilde. Störungen oder Konfigurationsfehler sind häufig kaum direkt zu erkennen. Sie äussern sich lediglich durch eine verminderte Servicequalität für die Nutzer, wie beispielsweise Verbindungsunterbrüche, langsame Datenübertragungen oder eine schlechte Übertragungsqualität. Die Überwachung der Servicequalität gehört zu den wichtigen Aufgaben eines Systembetreibers.

Bei bekannten Systemen werden beispielsweise die Werte einiger Systemparameter bestimmt und anhand dieser Werte wird anschliessend auf die Servicequalität geschlossen. So wird etwa mit Hilfe von Testverbindungen der Datendurchsatz bestimmt, indem eine bestimmte Menge von Daten übermittelt und die Zeit für deren Übermittlung gemessen wird. Ein anderer Parameter ist der sogenannte "round trip delay", d. h. diejenige Zeitdauer, die eine bestimmte Nachricht braucht, um von einem Punkt des Netzwerkes zu einem anderen und wieder zurück zu kommen. Auch die Zeit, die gebraucht wird, um beispielsweise eine bestimmte Internetseite herunter zu laden, kann bei der Bestimmung der Servicequalität berücksichtigt werden.

Da sich der Zustand solcher Datenübertragungssysteme innerhalb kurzer Zeit entscheidend verändern kann, können zwei gleiche Messungen im Abstand von wenigen Sekunden unter Umständen zu völlig verschiedenen Ergebnissen führen. D. h. das Resultat einer bestimmten Messung ist nur aussagekräftig für die im Moment der Messung herrschenden Bedingungen. Eine generelle Aussage lässt sich nicht machen.

Ein weiteres Problem besteht darin, dass diese Parameter zwar helfen können, sich einen Überblick über die aktuelle Servicequalität zu verschaffen, sie geben jedoch keinerlei Hinweise darauf, wo die Ursache für eine ungenügende Servicequalität liegt.

Eine Lösung für dieses Problem bietet die EP 1 079 647. Die darin beschriebene Vorrichtung ist in der Lage, nicht nur die Servicequalität eines Systems zu dokumentieren, sondern auch Hinweise auf die Ursachen vorhandener Probleme zu liefern. Hierfür wird anhand einer Vielzahl von Testverbindungen eine Fülle von Netzwerkparametern bestimmt, welche in einer Datenbank eingetragen werden. Mit einer aufwändigen, systematischen aber automatisierten Auswertung dieser Parameter lassen sich die Ursachen von Problemen lokalisieren.

Allerdings arbeitet das Verfahren "offline", d. h. die Daten werden in einem ersten Schritt erfasst und erst später ausgewertet. Da nicht von vornherein klar ist, welche Parameter in einer bestimmten Situation zur Fehleranalyse vorhanden sein müssen, müssen jederzeit sämtliche Parameter erfasst und abgespeichert werden. Dies ist sehr aufwändig und da viele Parameterwerte später nicht für die Auswertung gebraucht werden, wird ein Grossteil des Aufwandes umsonst betrieben. Zudem steigt die Netzbelastung durch die zusätzlichen Testverbindungen an und das System selbst wird durch die Messung stark beeinflusst, weshalb die Resultate unter Umständen nicht die reale Situation wiedergeben.

In der WO 00/70897 A1 ist ein Mobilfunksystem beschrieben, bei welchem die Mobilstationen bestimmte Systemparameter messen. Falls bestimmte Bedingungen erfüllt sind, werden die Messdaten als Report zur Basisstation weitergeleitet. Daraufhin kann das Netzwerk-Management gegebenenfalls weitere Massnahmen ergreifen. Eine Kontroll-Station teilt den verschiedenen Mobilstationen hierbei mit, welche Parameter erfasst werden sollen, welche Bedingungen einen Report zur Kontroll-Station auslösen und welche Informationen im Report übermittelt werden sollen.

### Darstellung der Erfindung

Aufgabe der Erfindung ist es, ein Verfahren und eine Vorrichtung der eingangs genannten Art anzugeben, mit welchen die Probleme beim Stand der Technik vermieden werden können und sich sowohl die Servicequalität bestimmen als auch die Ursachen einer verminderten Servicequalität lokalisieren lassen.

Die Lösung der Aufgabe ist durch die Merkmale des Anspruchs 1 definiert. Gemäss der Erfindung wird bei dem Verfahren zur Analyse eines Datenübertragungssystems mittels wiederholter Messung einer bestimmten Anzahl von Systemparametern laufend die Servicequalität überwacht. Wird eine ungenügende Servicequalität festgestellt, werden unverzüglich weitere Informationen über das Datenübertragungssystems ermittelt, indem weitere Systemparameter bestimmt und benötigte Daten gesammmelt werden. Anhand der weiteren Informationen sowie der bekannten Systemparameter kann schliesslich auf mögliche Ursachen für die ungenügende Servicequalität geschlossen werden.

Das erfindungsgemässe Verfahren ermöglicht es, auf eine ungenügende Servicequalität unverzüglich zu reagieren und mittels geeigneter Tests und einer gezielten Datenbeschaffung die im jeweiligen Zusammenhang wichtigen Systemparameter zu bestimmen. Bei einem Problem kann somit nicht nur die Wirkung, d. h. eine ungenügende, resultierende Servicequalität erfasst werden, sondern es kann gleichzeitig auch der aktuelle Systemzustand festgehalten werden. Dies wiederum erlaubt es, die möglichen Ursachen einzugrenzen, die zu der ungenügenden Servicequalität geführt haben, und anschliessend geeignete Massnahmen zur Behebung der gefundenen Ursachen zu ergreifen.

Zur Überwachung der Servicequalität des Datenübertragungssystems werden Informationen über das System benötigt. Diese Informationen bzw. Daten können auf verschiedene Weise beschafft werden. Eine Möglichkeit besteht darin, diese Daten anhand von speziellen Testverbindungen zu beschaffen, welche eigens zu diesem Zweck aufgebaut werden. Allerdings belasten derartige Testverbindungen das Kommunikationsnetzwerk in jedem Fall mit zusätzlichem Datenverkehr, weshalb den Nutzern während dieser Zeit nicht die volle Kapazität des Netzwerkes für Nutzverbindungen zur Verfügung steht. Zudem wird das zu testende Netzwerk durch diese Testverbindungen selbst beeinflusst, sodass die resultierenden Messresultate unter Umständen kein korrektes Bild des Netzwerkes liefern.

Es ist somit von Vorteil, die notwendigen Informationen und Daten über das System anhand von Nutzverbindungen zu beschaffen und zur Überwachung der Servicequalität im Wesentlichen diese Informationen zu verwenden. Damit kann die Belastung des Netzwerkes durch zusätzlichen Testverkehr auf ein Minimum beschränkt werden.

Das Verfahren eignet sich für verschiedene Arten von Datenübertragungssystemen. Es ist beispielsweise geeignet für Systeme mit drahtgebundener wie auch mit drahtloser Nachrichtenübermittlung, für Systeme mit Punkt-zu-Punkt Verbindungen wie auch für Systeme mit Paketvermittlung, für Systeme mit Datendiensten wie auch für Systeme mit Sprachdiensten oder für Mischformen solcher Systeme.

Das Verfahren eignet sich jedoch besonders für Mobilfunksysteme wie beispielsweise GSM (global system for mobile communications), GPRS (general packet radio service) oder UMTS (universal mobile telecommunication system), bei welchen sich der Systemzustand innerhalb von Sekunden entscheidend verändern kann. Bei solchen Systemen ist es schwierig, die Netzwerkperformance bzw. die Servicequalität zu messen und vorherzusagen, da diese Grössen von vielen verschiedenen Faktoren wie etwa dem jeweiligen Verkehrsaufkommen, dem aktuellen Routing wie auch der Kapazität und der Geschwindigkeit der beteiligten Netzwerkelementen abhängen. Dies gilt insbesondere für Mobilfunksysteme mit paketbasierter Datenübertragung wie etwa dem IP (Internet Protocol).

Wird bei der systematischen Überwachung des Netzwerkes eine ungenügende Servicequalität, nachfolgend QOS (quality of service) genannt, festgestellt, wird unverzüglich reagiert und es werden die für die jeweilige Situation relevanten Informationen, d. h. beispielsweise Daten über den Systemzustand beschafft. Anstatt fortwährend sämtliche eventuell notwendigen Parameter zu erfassen und aufzuzeichnen und diese später offline zu analysieren, werden in dem Moment, in welchem ein Problem auftritt, spezifisch einzelne oder mehrere Tests gestartet, um sich zur Problemanalyse die notwendigen Informationen über den Systemzustand zu beschaffen.

Diese Tests, die gleichzeitig und/oder nacheinander durchgeführt werden können, umfassen einerseits Prozeduren zur Messung der Werte bestimmter Netzwerkparameter und andererseits auch die Erfassung und Aufzeichnung gewisser, im System bereits vorhandener Daten, die nur noch gesammelt werden müssen.

Die Überwachung des QOS erfolgt anhand der laufenden Überprüfung gewisser Netzwerkparameter. Hierbei wird beispielsweise überwacht, ob die Werte dieser Parameter in den vorgegebenen Schranken oder ausserhalb der erlaubten Bereiche liegen oder ob unerlaubte Kombinationen von Parameterwerten vorliegen. Es kann auch überwacht werden, ob ein Parameterwert nur kurzfristig oder aber für längere Zeit ausserhalb der vorgegebenen Schranken liegt, wobei nur letzteres als Fehler detektiert und entsprechend weiter verfolgt wird. Die Bedingungen, wann ein Fehler, d. h. wann ein ungenügender QOS vorliegt, können entweder fest vorgegeben, vom Netzwerkadministrator variiert oder gar vom aktuellen Netzwerkzustand abhängig gemacht werden.

Beim Auftreten eines Problems, d. h. wenn die jeweiligen Bedingungen für einen ungenügenden QOS erfüllt sind, könnte im Prinzip immer dieselbe Auswahl der Tests gestartet werden, wobei die Konfiguration und die Abfolge der Tests immer gleich wäre. Um den Aufwand geringer zu halten, ist es jedoch von Vorteil, dass die Auswahl der durchzuführenden Tests wie auch deren Konfiguration und/oder deren Abfolge in Abhängigkeit der jeweiligen Situation erfolgt. Mit einer intelligenten Steuerung können die durchzuführenden Tests somit in Abhängigkeit der überwachten, d. h. der bereits bekannten, aktuellen Systemparameter und/oder in Abhängigkeit der festgestellten Parameterwerte erfolgen.

Damit wird eine Flexibilität erreicht, die eine gezielte Reaktion auf bestimmte Probleme und Gegebenheiten erlaubt und entsprechend eine einfache und schnelle Lokalisierung der Ursachen eines Problems ermöglicht.

Diese Tests beinhalten sämtliche möglichen Prozeduren zum Feststellen des aktuellen Systemzustandes, wobei beliebig viele Daten gesammelt werden können. Bevorzugt werden jedoch derartige Tests durchgeführt, welche das Datenübertragungssystem möglichst wenig mit zusätzlichem Datenverkehr belasten. Dies ermöglicht einerseits eine schnellere Problemanalyse und andererseits sind die erhaltenen Resultate verlässlicher, da die Tests den Systemzustand nicht unnötig stark verändern.

Typischerweise laufen zwecks Systemüberwachung zu jedem Zeitpunkt einzelne oder mehrere Tests in einem Datenübertragungssystem. Diese Tests laufen typischerweise auch dann weiter, wenn ein ungenügender QOS festgestellt wird. Um die Netzwerkbelastung weiter zu reduzieren und die Resultate noch weniger zu verfälschen, werden beim Auftreten von Problemen bereits gestartete, aber überflüssig gewordene Tests mit Vorteil vorzeitig abgebrochen. Ebenso vorteilhaft ist es, laufende Tests, die ihre Aufgabe bereits erfüllt haben, gleichermassen abzubrechen.

Ein derartiges Verfahren könnte im Grunde genommen auch mit einer manuellen Steuerung implementiert werden, was allerdings die permanente Präsenz von entsprechendem Personal notwendig machen würde. Dies ist nicht nur teuer, sondern bedingt auch einen hohen Ausbildungsstand des Personals. Zudem ist es schwierig, im entscheidenden Augenblick innerhalb weniger Sekunden die richtigen Entscheidungen zu fällen.

Es ist daher von Vorteil, wenn das Verfahren automatisch abläuft, indem das System beispielsweise entsprechend programmiert wird. Damit kann sowohl teures Personal eingespart werden und es ist sichergestellt, dass das System beim Auftreten von Problemen innerhalb nützlicher Frist reagiert, bevor sich der Systemzustand wieder verändert hat. Da die Intelligenz im Testsystem sitzt, ist sichergestellt, dass das System auf jedes Problem jeweils korrekt reagiert und verlässliche Resultate liefert. Dies ermöglicht auch, das System laufend mit den neusten Erkenntnissen zu erweitern, um die Ursachenfindung und die Problembehebung zu beschleunigen und zu verbessern.

Die erfindungsgemässe Vorrichtung zur Analyse eines Datenübertragungssystems weist erste Mittel auf zur Bestimmung der Servicequalität des Datenübertragungssystems. Weiter sind zweite Mittel vorgesehen zur Bestimmung weiterer Informationen über das Datenübertragungssystem, mit deren Hilfe beispielsweise der Systemzustand ermittelt werden kann. Um bei einem Problem möglichst schnell reagieren zu können, sind dritte Mittel vorgesehen, die unverzüglich die zweiten Mittel aktivieren, wenn eine ungenügende Servicequalität festgestellt wird. Zudem umfasst die Vorrichtung vierte Mittel zur Eingrenzung und/oder Bestimmung der möglichen Ursachen der ungenügenden Servicequalität anhand der weiteren Informationen und der bekannten Systemparameter.

Die Überwachung des QOS liefert die erforderlichen Informationen, um unverzüglich auf einen niedrigen QOS reagieren zu können und die notwendigen Daten zu sammeln bzw. die notwendigen Messungen durchzuführen, damit der aktuelle Systemzustand ermittelt und die möglichen Ursachen eingegrenzt werden können.

Die erfindungsgemässe Vorrichtung ist auf verschiedene Arten realisierbar. Sie könnte beispielsweise als fest verdrahtete elektronische Schaltung oder auch als speicherprogrammierbare Steuerung realisiert sein. Vorzugsweise ist sie jedoch als programmierbare Datenverarbeitungsvorrichtung, beispielsweise als Mikroprozessor mit zugehörigem Speicher, ausgebildet. Sie ist beispielsweise als physikalische Einheit ausgebildet und als eigenständiges Gerät in das Datenübertragungssystem integrierbar, indem sie an die entsprechenden Netzwerkelemente anschliessbar ist. Sie kann aber auch als logische Einheit, beispielsweise in der Form eines Softwaremoduls, ausgebildet sein, das auf einem bestehenden Gerät des Datenübertragungssystems, welches einen Mikroprozessor aufweist, installiert wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein schematisch dargestelltes GPRS-Kommunikationsnetzwerk und
- Fig. 2: ein Blockdiagramm des erfindungsgemässen Verfahrens.

Grundsätzlich sind in den Figuren gleiche Teile mit gleichen Bezugszeichen versehen.

### Wege zur Ausführung der Erfindung

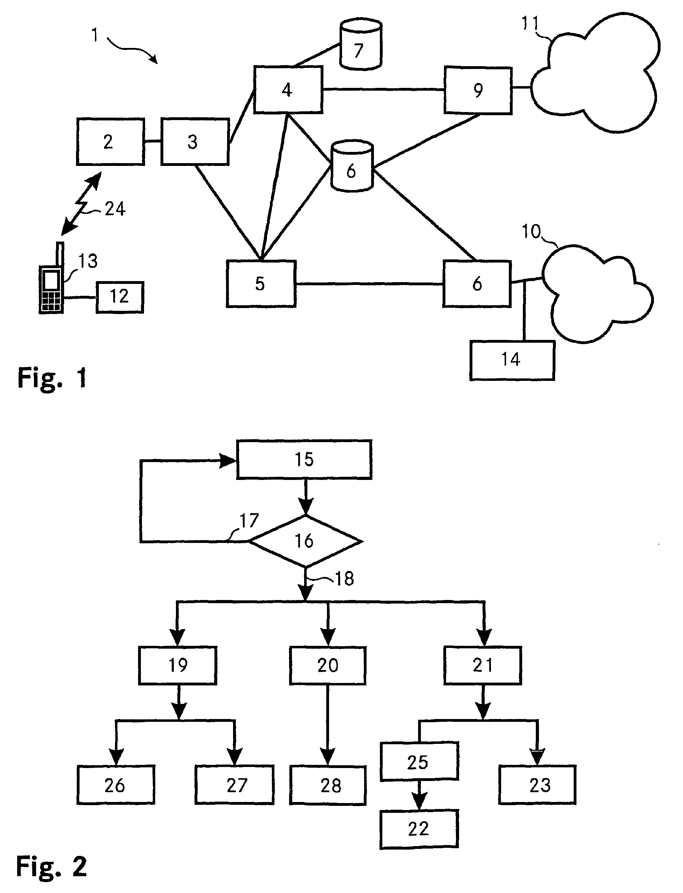

Figur 1 zeigt schematisch dargestellt ein GPRS-Netzwerk 1. Es umfasst unter anderem folgende Komponenten: eine BTS 2 (base station), einen BSC 3 (base station controller), ein MSC 4 (mobile switching center), einen SGSN 5 (serving GPRS support node), einen GGSN 6 (gateway GPRS support node), ein HLR 7, (home location register), ein VLR 8 (visitor location register) sowie ein GMSC 9 (gateway mobile switching center). Über den GGSN 6 ist das GPRS-Netzwerk 1 mit einem IP-Netzwerk 10 wie beispielsweise dem Internet und über das GMSC 9 mit einem Telefon-Netzwerk 11 wie beispielsweise einem konventionellen PSTN- oder einem ISDN-Netzwerk verbunden.

Zur Überwachung des QOS des GPRS-Netzwerks 1 ist zudem ein Kontroll-Element 12 vorgesehen, das beispielsweise an ein Benutzergerät 13 angeschlossen bzw. darin integriert ist. Das Kontroll-Element 12 könnte auch an einem anderen Ort an das GPRS-Netzwerk 1 angeschlossen oder in eines der bereits existierenden Netzelemente integriert sein. Das Kontroll-Element 12 überwacht beispielsweise FTP (file transfer protocol) Datenübertragung im GPRS-Netzwerk 1. Ein Benutzer, der sich im Moment beispielsweise im Bereich der BTS 2 befindet, lädt beispielsweise per FTP eine Datei von einem Server 14 des IP-Netzwerkes 10 auf sein Benutzergerät 13 herunter. Dieser Vorgang wird durch das Kontroll-Element 12 überwacht, indem es systematisch die Resultate solcher Datenübertragungen, beispielsweise die resultierende Datenrate bei einem solchen Filetransfer überwacht.

Figur 2 zeigt ein schematisch dargestelltes Diagramm dieses Verfahrens. Die Überwachung solcher Filetransfers erfolgt beispielsweise, indem in einem Schritt Datenbeschaffung 15 laufend die notwendigen Parameter zur Ermittlung der resultierenden Datenrate von FTP Filetransfers bestimmt werden. Diese Parameterwerte werden in einem Schritt Prüfung 16 analysiert. Ergibt die Prüfung 16, dass der QOS im erlaubten Bereich 17 liegt, springt das Kontroll-Element 12 zum Schritt Datenbeschaffung 15 zurück. Stellt es hingegen fest, dass aufgrund der aktuell gültigen Bedingungen ein ungenügender QOS 18 vorliegt, dass beispielsweise die resultierende Datenrate bei einem FTP Filetransfer unter dem vorgegebenen Schwellwert fällt, wird dies als Fehler erkannt und das Kontroll-Element 12 leitet unverzüglich entsprechende Massnahmen zur Lokalisierung der Ursache dieses Problems ein.

Welche Massnahmen ergriffen werden, hängt von der Programmierung des Kontroll-Elementes 12 ab. Im vorliegenden Beispiel können in Abhängigkeit des Zugriff auf andere Netzwerkelemente und/oder in Abhängigkeit relevanter Resultate anderer Tests unterschiedliche weitere Tests gestartet werden. Ein erster Test 19 besteht in der Überprüfung des SGSN 5, ein zweiter Test 20 in der Überprüfung des GGSN 6 oder ein dritter Test 21 besteht darin, weitere Tests zu starten, um zusätzliche Informationen zu erhalten. Es können sowohl einzelne, als auch mehrere Tests 19, 20, 21 gleichzeitig oder nacheinander durchgeführt werden.

Die beiden Tests 19 und 20 dienen zur Überprüfung der Bedingungen im SGSN 5 bzw. im GGSN 6 hinsichtlich deren momentanen Verkehrsbelastung. Aus diesen Verkehrsbedingungen lässt sich schliessen, ob der ungenügende QOS tatsächlich auf eine Überlastung eines der beiden Netzknoten zurück zu führen ist. Nach dem Abarbeiten dieser Tests 19, 20 können in Abhängigkeit sämtlicher bekannten Informationen wiederum weitere Tests 26, 27, 28 durchgeführt werden.

Der dritte Test 21 kann ebenfalls beliebige andere Tests umfassen. Im vorliegenden Fall ist das Kontroll-Element beispielsweise derart programmiert, dass nicht der Test 23, sondern ein PING-Test 22 gestartet wird. Hierbei wird unter der Kontrolle des Kontroll-Elementes 12 ein einzelnes Datenpaket (das sogenannte ICMP echo request packet) vom Benutzergerät 13 zum Server 14 geschickt wird. Empfängt der Server 14 dieses Datenpaket, sendet er es umgehend zum Benutzergerät 13 zurück. Der "round trip delay", d. h. die Zeitdauer, die dieses Datenpaket unterwegs ist, gibt Hinweise darauf, wo die Ursache für den verminderten QOS liegen könnte. Ist der "round trip delay" gross, deutet dies darauf hin, dass das Problem beim SGSN 5 liegt, dass er momentan beispielsweise überlastet ist. Ist der "round trip delay" hingegen klein, liegt die Ursache des niedrigen QOS wahrscheinlich bei der Funk-Schnittstelle 24 zwischen dem Benutzergerät 13 und der BTS 2. Schlechte Funk-Verhältnisse führen nämlich vielfach zu fehlerhaften Datenübertragungen, was wiederum ein wiederholtes Senden der fehlerhaften Datenpakete erfordert.

Bevor der PING-Test 22 allerdings gestartet wird, folgt zunächst ein Schritt Konfiguration 25, während dem der nachfolgende PING-Test 22 derart konfiguriert wird, dass die gelieferten Test-Resultate hinsichtlich der realen Situation aussagekräftig sind. Bei einem FTP-Filetransfer müssen die Daten typischerweise auf mehrere Datenpakete aufgeteilt werden, wobei die Geschwindigkeit, mit der ein Datenpaket in einem IP-Netz unterwegs ist, von dessen Grösse abhängt. Um die zur Verfügung stehende Übertragungskapazität optimal zu nutzen, werden die Datenpakete bei einem FTP-Filetransfer möglichst gross gemacht, wobei die maximale Grösse eines Datenpaketes beschränkt ist. Wird nun bei dem PING-Test 22 ein kurzes Datenpaket gesendet, gibt der resultierende "round trip delay" keine Auskunft über die aktuellen Übertragungsverhältnisse für die langen FTP-Datenpakete. Der PING-Test 22 wird daher so konfiguriert, dass die Länge des vom Benutzergerät 13 zum Server 14 bzw. umgekehrt übermittelten Datenpaketes etwa der Länge der Datenpakete bei einem FTP Filetransfer entspricht. Dies garantiert, dass das PING-Datenpaket während der Übertragung die gleiche Behandlung erfährt wie die FTP-Datenpakete. Dies wiederum sorgt dafür, dass das Test-Resultat ein möglichst gutes Bild der aktuellen Übertragungsverhältnisse liefert.

PING-Tests sind hervorragend zur Analyse eines Datenübertragungssystems geeignet, da sie praktisch keinen zusätzlichen Datenverkehr erzeugen und das Netz demzufolge nur minimal mit unnötigem Verkehr belasten. Die Test-Resultate sind entsprechend verlässlich, da das zu testende System durch den Test selber nur minimal beeinflusst wird.

Die gesamte Prozedur, d. h. von der Datenbeschaffung 15 bis hin zur Abarbeitung des letzten Tests, in diesem Fall des PING-Tests 22 läuft automatisch und schnell ab. Das Kontroll-Element 12 ist derart programmiert, dass auf jede mögliche Fehlersituation richtig und schnell reagiert wird, d. h. die geeignetsten Test durchgeführt werden, damit sämtliche benötigten Informationen zur Eingrenzung bzw. Lokalisierung der Fehlerursachen vorliegen, bevor sich der Zustand des Datenübertragungssystems geändert hat.

Währenddem nach dem Auftreten eines ungenügenden QOS 18 die jeweiligen Tests abgearbeitet werden, läuft die Überwachung des QOS, d. h. die Datenbeschaffung 15 weiter. Es können somit auch andere Fehler entdeckt und verfolgt werden, wenn sie kurz nach einem anderen Fehler auftreten, wobei das Kontroll-Element 12 derart programmiert ist, dass ein Fehler, der mehrmals kurz hintereinander auftritt, die nachfolgenden Tests nur ein einziges Mal auslöst.

Ist die Ursache eines zu niedrigen QOS hinreichend genau lokalisiert, stoppt das Kontroll-Element 12 sämtliche überflüssig gewordenen Tests, damit die Belastung des Netzwerkes reduziert werden kann.

Die Behebung der Fehlerursache kann, wenn möglich, natürlich ebenfalls automatisch vorgenommen werden, oder der Systemadministrator wird über den gefundenen Fehler und seine mögliche Ursache unterrichtet, damit dieser die entsprechenden, erforderlichen Massnahmen einleiten kann.

Zusammenfassend ist festzustellen, dass es die Erfindung erlaubt, beim Auftreten eines Problems, d. h. bei einem zu niedrigen QOS, unverzüglich zu reagieren und die notwendigen Massnahmen einzuleiten, um die zur Lokalisierung der Ursachen des verminderten QOS erforderlichen Informationen über den Systemzustand zu ermitteln, bevor sich der Systemzustand verändert. Es ist darüber hinaus möglich, das System laufend mit den neusten Erkenntnissen zu erweitern, indem einfach die Programmierung des Kontroll-Elementes 12 entsprechend geändert wird.

## Patentansprüche

1. Verfahren zur Lokalisierung von Ursachen einer verminderten Servicequalität eines Datenübertragungssystems (1), bei welchem die Servicequalität mittels wiederholter Messung einer bestimmten Anzahl von Systemparametern (15) überwacht (16) und eine verminderte Servicequalität festgestellt wird, indem festgestellt wird, ob ein Wert zumindest eines Systemparameters oder eine Kombination von Werten von mehreren Systemparametern ausserhalb eines erlaubten Bereiches liegt (18), **dadurch gekennzeichnet, dass** die Servicequalität von einem als physikalische oder logische Einheit ausgebildeten, an ein Benutzergerät (13) oder an einem anderen Ort an das Datenübertragungssystem (1) angeschlossenen bzw. in das Benutzergerät (13) oder in eines der bereits existierenden Netzelemente integrierten Kontroll-Element (12) überwacht wird und das Kontroll-Element (12) in dem Moment, in dem es eine verminderte Servicequalität feststellt, automatisch zusätzliche Tests durchführt, um weitere Informationen über einen Systemzustand des Datenübertragungssystems (1) zu ermitteln (19, 20, 21) und das Kontroll-Element (12) anhand der gemessenen Werte der Systemparameter und der weiteren ermittelten Informationen die Ursachen der verminderten Servicequalität lokalisiert.

2. Verfahren nach Anspruch 1, **dadurch gekennzeichnet, dass** zur Überwachung der Servicequalität im Wesentlichen Informationen verwendet werden, welche anhand von Nutzverbindungen beschafft werden.

3. Verfahren nach Anspruch 1 oder 2, **dadurch gekennzeichnet, dass** die Ursachen einer verminderten Servicequalität eines Mobilfunksystems (1), insbesondere eines Mobilfunksystems mit einer paketbasierten Datenübertragung, lokalisiert werden.

4. Verfahren nach einem der Ansprüche 1 bis 3, **dadurch gekennzeichnet, dass** die weiteren Informationen über den Systemzustand des Datenübertragungssystems (1) ermiitelt werden, indem das Kontroll-Element (12) gleichzeitig und/oder nacheinander eine Mehrzahl von Tests (19, 20, 21) durchführt.

5. Verfahren nach Anspruch 4, **dadurch gekennzeichnet, dass** das Kontroll-Element die verminderte Servicequalität anhand bestimmter Parameterwerte des bzw. der Systemparameter feststellt, wobei eine Auswahl, eine Konfiguration (25) und/oder eine Abfolge der durchzuführenden Tests (19, 20, 21) in Abhängigkeit der überwachten Systemparameter und/oder der detektierten Parameterwerte erfolgt.

6. Verfahren nach Anspruch 4 oder 5, **dadurch gekennzeichnet, dass** das Kontroll-Element (12) Tests durchführt, welche das Datenübertragungssystems (1) nur wenig belasten.

7. Verfahren nach einem der Ansprüche 1 bis 6, **dadurch gekennzeichnet, dass** das Kontroll-Element (12) einen laufenden Test abbricht, wenn der Test seine Aufgabe erfüllt hat oder wenn er überflüssig geworden ist.

8. Verfahren nach einem der Ansprüche 1 bis 7, **dadurch gekennzeichnet, dass** es automatisch abläuft.

9. Vorrichtung zur Lokalisierung von Ursachen einer verminderten Servicequalität eines Datenübertragungssystems (1) mit einem Kontroll-Element (12), welches erste Mittel zur Überwachung (16) einer Servicequalität des Datenübertragungssystems mittels wiederholter Messung einer bestimmten Anzahl von Systemparametern (15) umfasst und die ersten Mittel derart ausgebildet sind, dass eine verminderte Servicequalität feststellbar ist, indem feststellbar ist, ob ein Wert zumindest eines Systemparameters oder eine Kombination von Werten von mehreren Systemparametern ausserhalb eines erlaubten Bereiches liegt (18), **dadurch gekennzeichnet, dass** das Kontroll-Element als physikalische oder logische Einheit ausgebildet ist, an ein Benutzergerät (13) oder an einem anderen Ort an das Datenübertragungssystem (1) angeschlossen bzw. in das Benutzergerät (13) oder in eines der bereits existierenden Netzelemente integriert ist, zweite Mittel aufweist zur Bestimmung weiterer Informationen über einen Systemzustand des Datenübertragungssystems (1) mittels automatischer Durchführung zusätzlicher Tests und dritte Mittel aufweist zur Aktivierung der zweiten Mittel, wobei die Vorrichtung derart ausgebildet ist, dass die zweiten Mittel von den dritteln Mitteln in dem Moment aktivierbar sind, in dem durch die ersten Mittel eine verminderte Servicequalität festgestellt wird, und das Kontroll-Element vierte Mittel aufweist zur Lokalisierung der Ursachen der verminderten Servicequalität anhand der gemessenen Werte der Systemparameter und der weiteren Informationen.

10. Vorrichtung nach Anspruch 9, **dadurch gekennzeichnet, dass** das Kontroll-Element (12) als programmierbare Datenverarbeitungsvorrichtung ausgebildet ist.

## Claims

1. Method for localising causes of a reduced quality of service of a data transmission system (1), wherein the quality of service is monitored (16) by means of repeated measurement of a specific number of system parameters (15) and a reduced quality of service is established by establishing whether a value of at least one system parameter or a combination of values of a plurality of system parameters is located outside a permitted range (18), **characterised in that** the quality of service of a control element (12) which is in the form of a physical or logical unit and which is connected to a user device (13) or, at another location, to the data transmission system (1) or which is integrated in the user device (13) or in one of the already-existing network elements is monitored and the control element (12) automatically carries out additional tests (19, 20, 21) at the time at which it establishes a reduced quality of service in order to establish additional information concerning a system state of the data transmission system (1) and the control element (12) localises the causes of the reduced quality of service on the basis of the measured values of the system parameters and the additional information established.

2. Method according to claim 1, **characterised in that** information which is derived from useful connections is used in order to monitor the quality of service.

3. Method according to claim 1 or 2, **characterised in that** the causes of a reduced quality of service of a mobile telecommunications system (1), in particular a mobile telecommunications system having a packet-based data transmission system, are localised.

4. Method according to any one of claims 1 to 3, **characterised in that** the additional information concerning the system state of the data transmission system (1) is established by the control element (12) carrying out a plurality of tests (19, 20, 21) simultaneously and/or consecutively.

5. Method according to claim 4, **characterised in that** the control element establishes the reduced quality of service on the basis of specific parameter values of the system parameter(s), a selection, a configuration (25) and/or a sequence of the tests (19, 20, 21) to be carried out being effected in accordance with the monitored system parameters and/or the detected parameter values.

6. Method according to claim 4 or 5, **characterised in that** the control element (12) carries out tests which do not unduly burden the data transmission system (1).

7. Method according to any one of claims 1 to 6, **characterised in that** the control element (12) breaks off a current test if the test has fulfilled its task or if it has become superfluous.

8. Method according to any one of claims 1 to 7, **characterised in that** it is carried out automatically.

9. Device for localising causes of a reduced quality of service of a data transmission system (1) having a control element (12) which comprises first means for monitoring (16) a quality of service of the data transmission system by means of repeated measurement of a specific number of system parameters (15) and the first means are in such a form that a reduced quality of service can be established in that it is possible to establish whether a value of at least one system parameter or a combination of values of a plurality of system parameters is located outside a permitted range (18), **characterised in that** the control element is in the form of a physical or logical unit, is connected to a user device (13) or, at another location, to the data transmission system (1) or is integrated in the user device (13) or in one of the already-existing network elements, has second means for establishing additional information concerning a system state of the data transmission system (1) by automatically carrying out additional tests and has third means for activating the second means, the device being constructed in such a manner that the second means can be activated by the third means at the time at which a reduced quality of service is established by the first means, and the control element has fourth means for localising the causes of the reduced quality of service on the basis of the measured values of the system parameters and the additional information.

10. Device according to claim 9, **characterised in that** the control element (12) is in the form of a programmable data processing device.

## Revendications

1. Procédé pour localiser des causes d'une qualité de service réduite pour un système de transmission de données (1), avec lequel la qualité de service est surveillée (16) au moyen de la mesure répétée d'un certain nombre de paramètres du système (15) et une qualité de service réduite est déterminée en déterminant si une valeur d'au moins un paramètre du système ou une combinaison de valeurs de plusieurs paramètres du système est située (18) en dehors d'une plage autorisée, **caractérisé en ce que** la qualité de service est surveillée par un élément de contrôle (12), conçu en tant qu'unité physique ou logique, relié à un appareil d'utilisateur (13) ou en un autre lieu au système de transmission de données (1), respectivement intégré dans l'appareil d'utilisateur (13) ou dans un des éléments de réseau déjà existants, et **en ce que** l'élément de contrôle (12) au moment auquel il est déterminé une qualité de service réduite, exécute automatiquement des tests supplémentaires pour détecter (19, 20, 21) d'autres informations sur un état système du système de transmission de données (1) et **en ce que** l'élément de contrôle (12) localise les causes de la qualité de service réduite à l'aide des valeurs mesurées des paramètres du système et des autres informations détectées.

2. Procédé selon la revendication 1, **caractérisé en ce que** pour la surveillance de la qualité de service sont employées pour l'essentiel des informations qui sont obtenues à l'aide de liaisons réelles.

3. Procédé selon la revendication 1 ou 2, **caractérisé en ce que** sont localisées les causes d'une qualité de service réduite pour un système de radiocommunication mobile (1), en particulier pour un système de radiocommunication mobile avec une transmission de données basée sur des paquets.

4. Procédé selon une des revendications 1 à 3, **caractérisé en ce que** les autres informations sur l'état système du système de transmission de données (1) sont détectées, **en ce que** l'élément de contrôle (12) exécute une pluralité de tests (19, 20, 21) simultanément et/ou les uns après les autres.

5. Procédé selon la revendication 4, **caractérisé en ce que** l'élément de contrôle détermine la qualité de service réduite à l'aide de certaines valeurs de paramètre du ou des paramètres du système, moyennant quoi il est fait une sélection, une configuration (25) et/ou une suite des tests à exécuter (19, 20, 21) en fonction des paramètres surveillés du système et/ou des valeurs de paramètre détectées.

6. Procédé selon la revendication 4 ou 5, **caractérisé en ce que** l'élément de contrôle (12) exécute des tests qui ne représentent qu'une faible charge pour le système de transmission de données (1).

7. Procédé selon une des revendications 1 à 6, **caractérisé en ce que** l'élément de contrôle (12) interrompt un test en cours si le test a rempli sa tâche ou s'il est devenu superflu.

8. Procédé selon une des revendications 1 à 7, **caractérisé en ce qu'**il se déroule automatiquement.

9. Dispositif destiné à localiser des causes d'une qualité de service réduite pour un système de transmission de données (1) avec un élément de contrôle (12) qui comprend des premiers moyens de surveillance (16) d'une qualité de service pour le système de transmission de données au moyen d'une mesure répétée d'un certain nombre de paramètres du système (15) et les premiers moyens sont formés de manière telle que l'on puisse déterminer une qualité de service réduite en déterminant si une valeur d'au moins un paramètre du système ou une combinaison de valeurs de plusieurs paramètres du système est située en dehors d'une plage autorisée (18), **caractérisé en ce que** l'élément de contrôle est conçu en tant qu'unité physique ou logique unité, est relié à un appareil d'utilisateur (13) ou en un autre lieu au système de transmission de données (1), respectivement intégré dans l'appareil d'utilisateur (13) ou dans un des éléments de réseau déjà existants, **en ce qu'**il présente des deuxièmes moyens destinés à déterminer d'autres informations sur un état système du système de transmission de données (1) au moyen d'une exécution automatique de tests supplémentaires et **en ce qu'**il présente des troisièmes moyens destinés à activer les deuxièmes moyens, moyennant quoi le dispositif est conçu de manière telle que les deuxièmes moyens soient activables par les troisièmes moyens au moment auquel une qualité de service réduite est déterminée par les premiers moyens, et l'élément de contrôle présente des quatrièmes moyens destinés à localiser les causes de la qualité de service réduite à l'aide des valeurs mesurées des paramètres du système et des autres informations.

10. Dispositif selon la revendication 9, **caractérisé en ce que** l'élément de contrôle (12) est conçu en tant que dispositif de traitement de données programmable.
